# EUROPÄISCHE PATENTSCHRIFT

(11) **EP 2 234 840 B1**
(45) Veröffentlichungstag und Bekanntmachung des Hinweises auf die Patenterteilung: **30.05.2012**
(21) Anmeldenummer: 08865461.1
(22) Anmeldetag: 05.12.2008
(51) Int. Cl.: B60N 2/68, B60R 22/26

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE AUTOMOBILE

(30) Priorität: 20.12.2007 DE 102007062636
(43) Veröffentlichungstag der Anmeldung: 06.10.2010
(73) Patentinhaber: KEIPER GmbH & Co. KG, 67657 Kaiserslautern (DE)
(72) Erfinder: NISSEN, Rüdiger, 66629 Freisen (DE); FATH, Patrick, 67677 Enkenbach-Alsenborn (DE); CLOSSET, Andreas, 67806 Rockenhausen (DE)
(74) Vertreter: Kalkoff & Partner
(86) Internationale Anmeldenummer: PCT/EP2008/010334
(87) Internationale Veröffentlichungsnummer: WO 2009/080190

(56) Entgegenhaltungen:
- EP-A- 0 727 333
- DE-A1- 10 251 081
- US-A- 5 879 055
- US-A- 5 984 419

## Beschreibung

Die Erfindung betrifft einen Fahrzeugsitz, insbesondere einen Kraftfahrzeugsitz, mit den Merkmalen des Oberbegriffs des Anspruches 1.

Bei bekannten Fahrzeugsitzen dieser Art wird der Sicherheitsgurt beim Aufbringen des Lehnenpolsters und des Lehnenbezugs auf die Lehnenstruktur jeweils durch die Aussparungen und eine Blende gezogen und nach der Montage der Lehne am Sitzteil verankert. Wenn der Lehnenbezug gewechselt werden soll, wird zuerst die Verankerung des Sicherheitsgurtes gelöst.

In der DE 102 51 081 A1 wird ein Fahrzeugsitz der eingangs genannten Art vorgeschlagen, bei dem als Gurtdurchführung von der Vorderseite der Lehne zur Rückseite der Lehne ein auf der Lehnenstruktur aufsitzender und durch eine Aussparung im Lehnenbezug ragender Gurtumlenker verwendet wird, bei welchem der Sicherheitsgurt ohne Lösen der Verankerung eingefädelt und ausgefädelt werden kann, und welcher durch eine aufgesetzte Kappe geschlossen wird.

Der Erfindung liegt die Aufgabe zu Grunde, einen Fahrzeugsitz der eingangs genannten Art zu verbessern, insbesondere hinsichtlich der Benutzerfreundlichkeit beim Wechsel des Lehnenbezugs. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Topologie einer Aussparung mit einem geschlossenen Rand erzwingt, dass der Sicherheitsgurt durch die Aussparung gezogen wird. Indem die Aussparung mittels einer Unterbrechung mit dem äußeren Rand des Lehnenpolsters bzw. Lehnenbezugs verbunden ist, kann die Aussparung den Sicherheitsgurt freigeben, insbesondere zum Wechseln des Lehnenbezugs. Je nach Betrachtungsweise verlässt beim Abziehen des Lehnenbezugs der Sicherheitsgurt über die Unterbrechung die Aussparung oder der Lehnenbezug ist um den Sicherheitsgurt herum abziehbar. Die Unterbrechung der Aussparung kann im Lehnenbezug, aber auch im Lehnenpolster vorgesehen sein, um jeweils ein Auswechseln zu ermöglichen. Vorzugsweise ist wenigstens beim Lehnenbezug die Unterbrechung mittels wenigstens eines wiederverschließbaren Verschlusses verschlossen. Der Benutzer kann den Lehnenbezug ohne Hilfsmittel und ohne besondere Kenntnisse wechseln, indem er den Verschluss öffnet, den Lehnenbezug vom Lehnenpolster abzieht und dabei oder davor den Sicherheitsgurt ausfädelt, und schließlich den gewaschenen oder neuen etc. Lehnenbezug auf das Lehnenpolster aufzieht und den Verschluss wieder schließt. Reißverschlüsse oder Klettverschlüsse oder abschnittsweise Kombinationen davon sind bevorzugt.

Zur optischen Anpassung kann die Unterbrechung in direkter Nachbarschaft zu einem optisch hervorragenden Teil der Lehne, beispielsweise einer integrierten Kopfstütze oder einer Mittelbahn(Spiegel), angeordnet sein, vorzugsweise anstelle einer Naht. Die Erfindung ist selbstverständlich auch bei Fahrzeugsitzen mit aufgesetzter Kopfstütze anwendbar. Um den Sicherheitsgurt vollständig aus der Gurtfiihrung entfernen zu können, weist diese vorzugsweise eine teilweise offene Gurtaufnahme auf, in welche der Sicherheitsgurt einfädelbar ist und welche den eingefädelten Sicherheitsgurt umlenkt, beispielsweise von der Verankerung zum Gurtautomaten, und aus welcher der Sicherheitsgurt zum Wechseln des Lehnenbezugs wieder ausfädelbar ist.

Der erfindungsgemäße Fahrzeugsitz kann theoretisch in allen Sitzreihen eines Kraftfahrzeuges oder eines anderen Fahrzeuges eingesetzt werden.

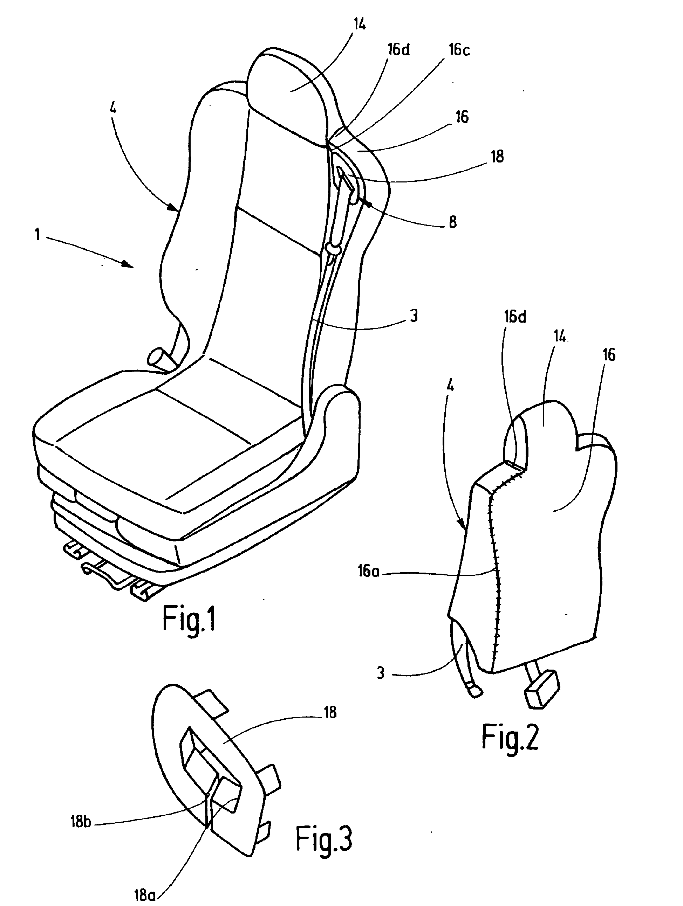

Im folgenden ist die Erfindung anhand eines in der Zeichnung dargestellten Ausführungsbeispiels näher erläutert. Es zeigen
Fig. 1 eine perspektivische Ansicht des Ausführungsbeispiels von schräg vorne,
Fig. 2 eine perspektivische Ansicht der Lehne von schräg hinten,
Fig. 3 eine perspektivische Ansicht der Blende von schräg vorne,

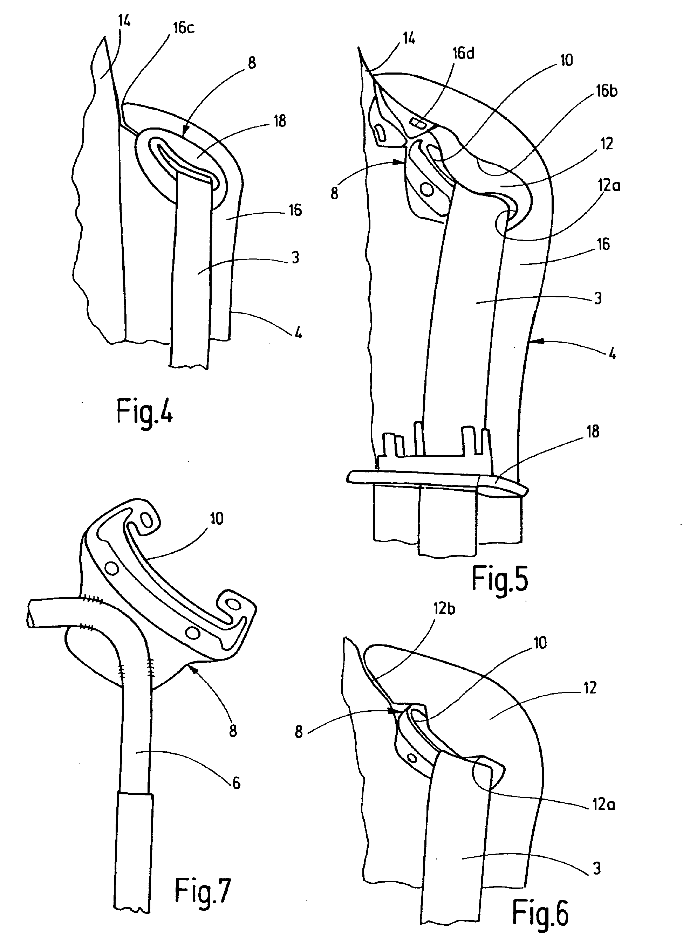

Fig. 4 eine Teilansicht des Ausführungsbeispiels im gebrauchsfertigen Zustand im Bereich der Gurtdurchführung,
Fig. 5 eine Teilansicht entsprechend Fig. 4 mit entfernter Blende und geöffnetem zweiten Verschluss,
Fig. 6 eine Teilansicht entsprechend Fig. 5 mit entferntem Lehnenbezug, und
Fig. 7 eine Teilansicht entsprechend Fig. 6 mit entferntem Lehnenpolster.

Ein Fahrzeugsitz 1 ist als Einzelsitz eines Kraftfahrzeuges, vorliegend eines Nutzfahrzeuges, vorgesehen. Die Anordnung des Fahrzeugsitzes 1 innerhalb des Kraftfahrzeuges und dessen gewöhnliche Fahrtrichtung definieren nachfolgend verwendete Richtungsangaben. Der Fahrzeugsitz 1 ist als Gurtintegralsitz ausgebildet, d.h. mit einem integrierten Sicherheitsgurt 3 versehen. Die Lehne 4 des Fahrzeugsitzes 1 weist eine tragende Struktur auf, kurz als Lehnenstruktur 6 bezeichnet, welche vorliegend rahmenförmig ausgebildet ist.

An ihrer näher zur Außenseite des Kraftfahrzeuges gelegenen (d.h. schwellerseitigen) oberen Ecke weist die Lehnenstruktur 6 eine Gurtdurchführung 8 auf, welche mit dem rahmenförmigen Teil der Lehnenstruktur 6 verbunden ist. Die Gurtdurchführung 8 kann aus Metal und/oder Kunststoff bestehen. Mittels der Gurtdurchführung 8 wird der Sicherheitsgurt 3 von der Vorderseite der Lehne 4 von unten von seiner Verankerung kommend in Richtung zur Rückseite der Lehne 4 geführt, wo er nach unten umgelenkt und zu einem Gurtautomaten geleitet wird. Der Gurtautomat ist vorzugsweise in die Lehne 4 integriert, kann aber auch im Unterbau befestigt sein. Das mit dem Sicherheitsgurt 3 zusammenwirkende Gurtschloss ist auf der anderen Seite des Fahrzeugsitzes 1 (d.h. tunnelseitig) angebracht.

Die Gurtdurchführung 8 weist eine Gurtaufnahme 10 auf, die vorliegend halbmondförmig ausgebildet und durch Unterbrechung ihrer oberen Begrenzung teilweise nach oben offen ist. Die Gurtaufnahme 10 verläuft von ihrem näher zur Außenseite des Kraftfahrzeuges gelegenen (schwellerseitigen) Ende aus nach innen und dabei zugleich nach oben zu ihrem anderen (tunnelseitigen) Ende. Der in die Gurtaufnahme 10 eingelegte Sicherheitsgurt 3 ist innerhalb derselben zwischen deren Enden beweglich, wobei er wenigstens von einem der verbliebenen Abschnitte der oberen Begrenzung übergriffen wird.

Die Lehnenstruktur 6 ist wenigstens auf ihrer Vorderseite von einem Lehnenpolster 12 der Lehne 4 bedeckt. Das Lehnenpolster 12 besteht vorzugsweise aus Schaumstoff. Im Bereich der Gurtdurchführung 8 weist das Lehnenpolster 12 eine erste Aussparung 12a für den Zugang zur Gurtdurchführung 8 auf. Die erste Aussparung 12a ist rundum vom Material des Lehnenpolsters 12 umgeben bis auf eine Stelle, vorzugsweise am tunnelseitigen Ende, an der eine erste Unterbrechung 12b nach außen vorgesehen ist. Die erste Unterbrechung 12b ist vorzugsweise ein einfacher Schnitt durch das Lehnenpolster 12, welcher die Aussparung 12a mit dem äußeren Rand des Lehnenpolsters 12, d.h. vorliegend dem oberen Rand des Lehnenpolsters 12, verbindet. Im Inneren der Lehnenstruktur 6 oder auf deren Rückseite ist vorzugsweise ein stützendes Element vorgesehen, beispielsweise eine Matte, welches die vom Insassen auf das Lehnenpolster 12 ausgeübten Kräfte aufnimmt. Die erste Unterbrechung 12b ist vorzugsweise in direkter Nachbarschaft zu einer integrierten Kopfstütze 14 der Lehne 4 angeordnet.

Die Lehnenstruktur 6 samt Lehnenpolster 12 und gegebenenfalls stützendem Element ist von einem Lehnenbezug 16 überzogen. Der Lehnenbezug 16 besteht vorzugsweise aus einem textilen Material oder Leder. Der Lehnenbezug 16 weist auf der Seite mit der Gurtdurchführung 8 einen ersten Verschluss 16a, insbesondere einen sogenannten Reißverschluss (oder Einhängeleiste oder "ZipLock") auf, der von einem unteren Ende, welches am unteren Ende des Lehnenbezugs 16 angeordnet, bis zu einem oberen Ende im Bereich der ersten Unterbrechung 12b des Lehnenpolsters 12 geführt ist. Im Bereich der Gurtdurchführung 8 ist der Lehnenbezug 16 mit einer zweiten Aussparung 16b für den Zugang zur Gurtdurchführung 8 versehen. An einer Stelle dieser zweiten Aussparung 16b, vorzugsweise am tunnelseitigen Ende, weist der Lehnenbezug 16 eine zweite Unterbrechung 16c auf, die von der besagten zweiten Aussparung 16b bis zum oberen Ende des ersten Verschlusses 16a reicht, also die zweite Aussparung 16b mit dem äußeren Rand des Lehnenbezugs 16 verbindet. An der zweiten Unterbrechung 16c ist der Lehnenbezug 16 mittels eines zweiten Verschlusses 16d, vorzugsweise eines textilen Haftverschlusses (Klettverschluss, Velcro) oder eines Reißverschlusses, einer Einhängeleiste oder eines "ZipLocks", wieder verschlossen. Die erste Unterbrechung 12b und die zweite Unterbrechung 16c sind - wenigstens näherungsweise deckungsgleich zueinander angeordnet, so dass auch die zweite Unterbrechung 16c vorzugsweise in direkter Nachbarschaft zu der Kopfstütze 14 angeordnet ist.

Die Gurtdurchführung 8 weist an ihrer Vorderseite eine Blende 18 auf, deren Form ein Tunnel mit einer zentralen, dritten Aussparung 18a und einem endseitigem Flansch ist. Die Blende 18 besteht vorzugsweise aus Kunststoff. Die Blende 18 ist aufgesteckt und beispielsweise durch eine Clipsverbindung oder Schraubverbindung im Bereich der Gurtaufnahme 10 mit den anderen Teilen der Gurtdurchführung 8 verbunden. Der Sicherheitsgurt 3 tritt durch die Blende 18, genauer gesagt durch die dritter Aussparung, um zur Gurtaufnahme 10 zu gelangen. Der Flansch der Blende 18 deckt den begrenzenden Rand der zweiten Aussparung 16c des Lehnenbezugs 16 und den darunter gelegenen Rand der ersten Aussparung 12a des Lehnenpolsters 12 ab. An einer Stelle des Randes der dritten Aussparung 18a weist die Blende 18 eine dritte Unterbrechung 18b auf, vorzugsweise einen Schlitz, der die dritten Aussparung 18a mit der Außenseite verbindet. Durch die dritte Unterbrechung 18b wird der Sicherheitsgurt 3 bei der Montage in die dritte Aussparung 18a eingefädelt und gegebenfalls wieder ausgefädelt.

Wenn beim fertigen Fahrzeugsitz 1 der Lehnenbezug 16 gewechselt werden soll, wird die Blende 18 von den anderen Teilen der Gurtdurchführung 8 entfernt, so dass sie entlang des Sicherheitsgurtes 3 beweglich ist. Optional kann der Sicherheitsgurt 3 über die dritte Unterbrechung 18b aus der Blende 18 ausgefädelt werden. Außerdem werden die beiden Verschlüsse 16a und 16d geöffnet. Optional kann der Sicherheitsgurt 3 aus der Gurtaufnahme 10 heraus über die erste und zweite Unterbrechung 12b und 16c ausgefädelt werden. Derjenige Bereich des Lehnenbezugs 16, der vom Rand des ersten Verschlusses 16a, der zweiten Unterbrechung 16c und dem oberen Rand der zweiten Aussparung 16b begrenzt ist und haubenförmig ausgebildet ist, wird vom Lehnenpolster 12 abgezogen, gegebenenfalls unter dem Sicherheitsgurt 3 hindurchgezogen, worauf der gesamte Lehnenbezug 16 entfernt werden kann. Der gleiche oder ein andere Lehnenbezug 16 kann auf die umgekehrte Weise wieder angebracht werden, wobei die Verschlüsse 16a und 16d wieder verschließbar sind.

### Bezugszeichenliste

- 1: Fahrzeugsitz
- 3: Sicherheitsgurt
- 4: Lehne
- 6: Lehnenstruktu
- 8: Gurtdurchführung
- 10: Gurtaufnahme
- 12: Lehnenpolster
- 12a: erste Aussparung
- 12b: erste Unterbrechung
- 14: Kopfstütze
- 16: Lehnenbezug
- 16a: erster Verschluss
- 16b: zweite Aussparung
- 16c: zweite Unterbrechung
- 16d: zweiter Verschluss
- 18: Blende
- 18a: dritte Aussparung
- 18b: dritte Unterbrechung

## Patentansprüche

1. Fahrzeugsitz, insbesondere Kraftfahrzeugsitz, mit einem Sicherheitsgurt (3), welcher in den Fahrzeugsitz (1) integriert ist, und mit einer Lehne (4), welche eine Lehnenstruktur (6), ein Lehnenpolster (12), einen Lehnenbezug (16) und eine Gurtdurchführung (8) aufweist, mittels derer der Sicherheitsgurt (3) von der Vorderseite der Lehne (4) in Richtung zur Rückseite der Lehne (4) geführt ist, wobei das Lehnenpolster (12) und/oder der Lehnenbezug (16) eine Aussparung (12a, 16b) für den Zugang zur Gurtdurchführung (8) aufweist, **dadurch gekennzeichnet, dass** die Aussparung (12a, 16b) mittels einer Unterbrechung (12b, 16c) mit dem äußeren Rand des Lehnenpolsters (12) bzw. Lehnenbezugs (16) verbunden ist, wobei insbesondere zum Wechseln des Lehnenbezugs (16) der Sicherheitsgurt (3) über die Unterbrechung (12b, 16c) die Aussparung (12a, 16b) verlassen kann.

2. Fahrzeugsitz nach Anspruch 1, **dadurch gekennzeichnet, dass** die Unterbrechung (12b, 16c) mittels eines wiederverschließbaren Verschlusses (16a, 16d) verschlossen ist.

3. Fahrzeugsitz nach Anspruch 2, **dadurch gekennzeichnet, dass** der Verschluss (16a, 16d) zum Wechseln des Lehnenbezugs (16) geöffnet wird.

4. Fahrzeugsitz nach Anspruch 2 oder 3, **dadurch gekennzeichnet, dass** der Verschluss (16a, 16d) als Reißverschluss und/oder als Klettverschluss ausgebildet ist.

5. Fahrzeugsitz nach einem der Ansprüche 2 bis 4, **dadurch gekennzeichnet, dass** zum Wechseln des Lehnenbezugs (16) der vom Verschluss (16a, 16d) und dem Rand der Aussparung (12a, 16b) begrenzte Bereich des Lehnenbezugs (16) unter dem Sicherheitsgurt (3) hindurchgezogen wird.

6. Fahrzeugsitz nach einem der vorhergehenden Ansprüche, **dadurch gekennzeichnet, dass** die Unterbrechung (12b, 16c) in direkter Nachbarschaft zu einer integrierten Kopfstütze (14) der Lehne (4) oder einem anderen, optisch hervorragenden Teil der Lehne (4) angeordnet ist.

7. Fahrzeugsitz nach einem der vorhergehenden Ansprüche, **dadurch gekennzeichnet, dass** das Lehnenpolster (12) eine erste Aussparung (12a) mit einer ersten Unterbrechung (12b) und der Lehnenbezug (16) eine zweite Aussparung (16b) mit einer zweiten Unterbrechung (16c) aufweist.

8. Fahrzeugsitz nach einem der vorhergehenden Ansprüche, **dadurch gekennzeichnet, dass** die Gurtdurchführung (8) eine teilweise offene Gurtaufnahme (10) aufweist, in welche der Sicherheitsgurt (3) einfädelbar ist und welche den eingefädelten Sicherheitsgurt (3) umlenkt.

9. Fahrzeugsitz nach Anspruch 8, **dadurch gekennzeichnet, dass** zum Wechseln des Lehnenbezugs (16) der Sicherheitsgurt (3) aus der Gurtaufnahme (10) ausfädelt.

## Claims

1. A vehicle seat, in particular motor vehicle seat, having a safety belt (3) which is integrated into the vehicle seat (1) and having a backrest (4) which has a backrest structure (6), a backrest cushion (12), a backrest lining (16) and a belt leadthrough (8), by means of which the safety belt (3) is guided from the front side of the backrest (4) in the direction of the rear side of the backrest (4), the backrest cushion (12) and/or the backrest lining (16) having a cutout (12a, 16b) for access to the belt leadthrough (8), **characterized in that** the cutout (12a, 16b) is connected by means of a gap (12b, 16c) to the outer edge of the backrest cushion (12) or backrest lining (16), in particular in order to exchange the backrest lining (16), the safety belt (3) being able to leave the cutout (12a, 16b) via the gap (12b, 16c).

2. The vehicle seat as claimed in claim 1, **characterized in that** the gap (12b, 16c) is closed by means of a reclosable fastener (16a, 16d).

3. The vehicle seat as claimed in claim 2, **characterized in that** the fastener (16a, 16d) is opened for changing the backrest lining (16).

4. The vehicle seat as claimed in claim 2 or 3, **characterized in that** the fastener (16a, 16d) is configured as a zip fastener and/or as a hook-and-loop fastener.

5. The vehicle seat as claimed in one of claims 2 to 4, **characterized in that** for changing the backrest lining (16) the region of the backrest lining (16) defined by the fastener (16a, 16d) and the edge of the cutout (12a, 16b) is pulled through under the safety belt (3).

6. The vehicle seat as claimed in one of the preceding claims, **characterized in that** the gap (12b, 16c) is arranged in the immediate vicinity of an integrated headrest (14) of the backrest (4) or another visually protruding part of the backrest (4).

7. The vehicle seat as claimed in one of the preceding claims, **characterized in that** the backrest cushion (12) has a first cutout (12a) with a first gap (12b) and the backrest lining (16) has a second cutout (16b) with a second gap (16c).

8. The vehicle seat as claimed in one of the preceding claims, **characterized in that** the belt leadthrough (8) has a partially open belt receiver (10), into which the safety belt (3) may be threaded, and which deflects the threaded-in safety belt (3).

9. The vehicle seat as claimed in claim 8, **characterized in that** the safety belt (3) is unthreaded from the belt receiver (10) for changing the backrest lining (16).

## Revendications

1. Siège de véhicule, en particulier siège de véhicule automobile, comportant une ceinture de sécurité (3) qui est intégrée dans le siège de véhicule (1) et un dossier (4) qui possède une structure de dossier (6), un rembourrage de dossier (12), une housse de dossier (16) et une traversée de ceinture (8) grâce à laquelle la ceinture de sécurité (3) est guidée du côté avant du dossier (4) vers le côté arrière du dossier (4), le rembourrage de dossier (12) et/ou la housse de dossier (16) comprenant une ouverture (12a, 16b) pour l'accès à la traversée de ceinture (8), **caractérisé en ce que** l'ouverture (12a, 16b) est reliée au bord extérieur du rembourrage de dossier (12) ou de la housse de dossier (16) par un passage (12b, 16c), la ceinture de sécurité (3) pouvant quitter l'ouverture (12a, 16b) en passant par le passage (12b, 16c), notamment pour changer la housse de dossier (16).

2. Siège de véhicule selon la revendication 1, **caractérisé en ce que** le passage (12b, 16c) est fermé par une fermeture (16a, 16d) refermable.

3. Siège de véhicule selon la revendication 2, **caractérisé en ce que** la fermeture (16a, 16d) est ouverte afin de changer la housse de dossier (16).

4. Siège de véhicule selon la revendication 2 ou 3, **caractérisé en ce que** la fermeture (16a, 16d) prend la forme d'une fermeture à glissière et/ou d'une fermeture à boucles et crochets.

5. Siège de véhicule selon l'une des revendications 2 à 4, **caractérisé en ce que**, pour le remplacement de la housse de dossier (16), la zone de la housse de dossier (16) délimitée par la fermeture (16a, 16d) et par le bord de l'ouverture (12a, 16b) est tirée par le dessous de la ceinture de sécurité (3).

6. Siège de véhicule selon l'une des revendications précédentes, **caractérisé en ce que** le passage (12b, 16c) est implanté à proximité immédiate d'un appuie-tête (14) intégré au dossier (4) ou d'une autre partie du dossier (4) qui se distingue optiquement.

7. Siège de véhicule selon l'une des revendications précédentes, **caractérisé en ce que** le rembourrage de dossier (12) possède une première ouverture (12a) avec un premier passage (12b) et la housse de dossier (16) possède une deuxième ouverture (16b) avec un deuxième passage (16c).

8. Siège de véhicule selon l'une des revendications précédentes, **caractérisé en ce que** la traversée de ceinture (8) possède un logement de ceinture (10) partiellement ouvert dans lequel la ceinture de sécurité (3) peut être enfilée et qui sert à renvoyer la ceinture de sécurité (3) enfilée.

9. Siège de véhicule selon la revendication 8, **caractérisé en ce que**, afin de remplacer la housse de dossier (16), la ceinture de sécurité (3) est sortie du logement de ceinture (10).
